# EUROPÄISCHE PATENTSCHRIFT

(11) **EP 1 306 624 B1**
(45) Veröffentlichungstag und Bekanntmachung des Hinweises auf die Patenterteilung: **06.08.2008**
(21) Anmeldenummer: 02090363.9
(22) Anmeldetag: 28.10.2002
(51) Int. Cl.: F24D 3/16, F24D 3/14

(54) **Flächenelement eines Gebäudes mit einer integrierten Flächenheiz- und/oder-kühleinrichtung**
Surface element of a building with integrated surface heat- and/or cooling device
Elément de surface avec un dispositif de chauffage et/ou de refrigeration à grande surface intégré

(30) Priorität: 26.10.2001 DE 10154042
(43) Veröffentlichungstag der Anmeldung: 02.05.2003
(73) Patentinhaber: Jahn, Axel, Dr., 14195 Berlin (DE)
(72) Erfinder: Jahn, Axel, Dr., 14195 Berlin (DE)
(74) Vertreter: Schneider, Henry

(56) Entgegenhaltungen:
- EP-A- 0 541 947
- EP-A- 1 243 861
- DE-A- 3 938 596
- GB-A- 1 040 018

## Beschreibung

Die Erfindung betrifft eine Flächenelement eines Gebäudes mit den in Anspruch 1 genannten Merkmalen.

Flächenelemente der gattungsgemäßen Art sind bekannt. Hierbei werden vorgefertigte Kapillarrohrmatten, die aus parallel angeordneten und mit Verteiler- und Sammlerrohren (Stammrohren) verbundenen Kapillarröhrchen bestehen, in Flächenelementen von Gebäuden, beispielsweise Fußboden, Wänden, Decken oder dergleichen, integriert. Die Kapillarrohrmatten werden hierbei in einer Estrichplatte auf dem Rohboden, bei schwimmenden Estrichen auf der Dämmschicht, auf der Rohdecke, in einer Putzschicht, auf Trockenbauplatten oder in Kassettendecken installiert.

Es hat sich gezeigt, dass Kapillarrohrmatten auf dem Bau durch unsachgemäße Handhabung, beispielsweise von Unbefugten, leicht beschädigt werden können. Ferner sind Planung und Auslegung, Verlegung, Montage und Verbindung der Kapillarrohrmatten vor Ort sowie der Koordinationsaufwand mit dem Gebäude personen- und zeitaufwendig. Insbesondere, wenn Kapillarrohrmatten auf einen so genannten Rohboden vor Ausgießen eines Heizestriches oder an einer Wand vor Verputzen der Wand verlegt werden sollen, stellt die Verlegung durch die aus der Ebene der Kapillarrohrmatten überstehenden Stammrohre - da diese einen größeren Durchmesser besitzen als die Kapillarrohre - ein Problem dar. Entweder sind die über die Ebene der Kapillarrohrmatten überstehenden Stammrohre durch eine entsprechend starke Abdeckschicht (Heizschicht, Kühlschicht) abzudecken. Dies führt durch die Dicke der Abdeckschicht zu Wirkungsgradverlusten und schlechter Regeldynamik. Aus Gründen des Komforts und der Energieeinsparung soll die Flächenheiz- und/oder -kühleinrichtung eine gute Regeldynamik haben und mit möglichst niedriger Heizwassertemperatur und/oder möglichst hoher Kühlwassertemperatur betrieben werden. Hierzu ist zweckmäßig, die Kapillarrohre so nahe wie möglich an die wärmeaustauschende, das heißt innere Oberfläche eines Raumes zu legen. Die aufgrund ihres größeren Durchmessers über die Ebene der Kapillarrohrmatte überstehenden Stammrohre stehen dieser Forderung entgegen.

Es ist daher bereits vorgeschlagen worden, die Stammrohre im Zwickel zwischen Boden und Wand beziehungsweise Decke und Wand, in Abkofferungen, hinter Raumtrennwänden, oberhalb abgehängter Decken, in Stuckprofilen oder dergleichen anzuordnen. Hierdurch kann zwar erreicht werden, dass die Kapillarrohre selber möglichst nahe an den wärmeaustauschenden Oberflächen angeordnet werden können, jedoch ist durch den Ort der Anordnung der Stammrohre eine Wegeverlängerung für die Kapillarrohre erforderlich, die nicht dem eigentlichen Zweck des geregelten Wärmeaustausches dienen. Damit einhergehend ist ein hoher konstruktiver und integrativer Aufwand bei der Planung und Baudurchführung derartiger Flächenheiz- und/oder -kühleinrichtungen notwendig.

Andererseits besteht die Möglichkeit, in den Rohboden zum versenkten Anordnen der überstehenden Stammrohre eine entsprechende Aufnahmenut aufwendig, beispielsweise durch Fräsen, Stemmen oder dergleichen, einzubringen. Neben dem hiermit verbundenen Aufwand bestehen Gefahren hinsichtlich einer statischen Schwächung von Konstruktionselementen des Gebäudes.

EP 1 243 861 A2 enthält einen Aufbau für einen Wärmetauscher. Dieser Wärmetauscher ist speziell zum Anbringen an einer Raumdecke vorgesehen. Für die Rohrverlegung wird hierbei vorgeschlagen, Rohrleitungskanäle zu verwenden. In diese werden die Vor- und Rücklaufleitung vor Installation der Wärmetauscher verlegt, wobei zur Verbindung der Vor- und Rücklaufleitungen mit den Wärmetauschern Anschlussleitungsstücke vorgesehen sind. Die Rohrleitungskanäle können dabei auf oder versenkt in der Raumdecke angeordnet werden. Bei der versenkten Montage der Rohrleitungskanäle ist die Deckenstatik besonders zu berücksichtigen.

In der DE 41 06 200 A1 wird vorgeschlagen, zur Vermeidung derartiger Nachteile die Kapillarrohrmatten in vorgefertigten Trägerplatten vorzumontieren. Neben der umständlichen Handhabung derartiger vorgefertigter Trägerplatten ist eine flexible Anpassung der Kapillarrohrmatten an unterschiedliche Heiz- und/oder Kühlflächen nur sehr aufwendig möglich. Ferner ist die Trägerplatte an der Stelle der Verteil- und Sammlerrohre statisch geschwächt.

In DE 39 38 596 A1 ist eine Leichtbauplatte für Wand-, Fußboden- oder Deckenkonstruktionen in Sandwichbauweise beschrieben, in die Kapillarrohre eingebracht werden. Die Kapillarrohre werden an Sammelrohre angeschlossen, wobei sich das Vorlaufrohr an der einen und das Rücklaufrohr an der anderen Plattenseite befindet. Nachteilig bei den vorgefertigten Leichtbauplatten ist auch hier die ungünstige Anpassung an verschiedene Raumgrößen.

Der Erfindung liegt die Aufgabe zugrunde, eine Flächenheiz- und/oder -kühleinrichtung der gattungsgemäßen Art zu schaffen, die in einfacher Weise sicher und flexibel bauseitig einsetzbar ist.

Erfindungsgemäß wird diese Aufgabe durch eine Flächenheiz- und/oder -kühleinrichtung mit den in Anspruch 1 genannten Merkmalen gelöst. Dadurch, dass ein Stammrohrkanal zur Aufnahme der Stammrohre (Verteiler- und Sammlerrohre und gegebenenfalls Tichelmannrohr) vorgesehen ist, der zeitlich und montagemäßig unabhängig von den Kapillarrohrmatten an beziehungsweise auf einem Flächenelement anordbar ist, und der Stammrohrkanal in das Flächenelement integrierbar ist, wird vorteilhaft erreicht, dass eine sichere und geschützte Anordnung der Stammrohre möglich ist. Durch die Stammrohrkanäle wird ferner erreicht, dass sich hinsichtlich der Anordnung der Stammrohre und somit der gesamten Kapillarrohrmatte relativ freie Gestaltungsmöglichkeiten ergeben. Die Stammrohre müssen nunmehr nicht in Eckbereichen eines Raumes oder hinter Verkleidungselementen oder dergleichen angeordnet werden. Hierdurch ergibt sich ein geringerer Planungs- und Montageaufwand für die erfindungsgemäßen Flächenheiz- und/oder -kühleinrichtungen. Aufwendige Stemmarbeiten oder dergleichen zum Schaffen von Freiraum für die Verlegung der Stammrohre entfallen ebenfalls.

Durch Vormontage der Stammrohrkanäle lassen sich diese in einem auf dem Rohboden aufzubringenden Estrich oder dergleichen integrieren. Der Stammrohrkanal wirkt gleichzeitig als Armierung für den Estrich, so dass Festigkeit und Belastbarkeit der Estrichplatte nicht beeinträchtigt, gegebenenfalls sogar verbessert wird. Nach erfolgtem Einlegen der Kapillarrohrmatten mit ihren Stammrohren in den Stammrohrkanal und Auslegen der Kapillarrohrmatten auf den Estrich erfolgt in einfacher Weise eine Abdeckung mit einer Heiz- und/oder Kühlschicht, so dass sich eine vollständige Integration der Kapillarrohrmatten und der Stammrohrkanäle in das Flächenelement ergibt. Durch die hier gefundene Anordnung kann insbesondere die Abdeckschicht (Heizschicht und/oder Kühlschicht) besonders dünnwandig ausgebildet werden. Die Kapillarrohre lassen sich so möglichst nahe an der wärmetauschenden Oberfläche anordnen, so dass sich hohe Wirkungsgrade erzielen lassen.

In bevorzugter Ausgestaltung der Erfindung ist vorgesehen, dass der Stammrohrkanal um seine Längsachse und um seine Querachse biegesteif ist. Hierdurch wird vorteilhaft möglich, eine Druckfestigkeit und eine Biegezugfestigkeit der Estrichplatte trotz der Integration der Stammrohrkanäle zu erhalten, ohne dass es einer Vergrößerung einer Höhe der Estrichplatte bedarf. Insbesondere wird hierdurch verhindert, dass größere Aufbauhöhen der Estrichplatte planungstechnisch zu berücksichtigen sind. Insofern lassen sich zu einer relativ späten Bauphase noch Entscheidungen über den Einsatz der erfindungsgemäßen Flächenheizund/oder -kühleinrichtung mit Stammrohrkanälen treffen.

In weiterer bevorzugter Ausgestaltung der Erfindung ist vorgesehen, dass die Stammrohrkanäle über Abstützelemente, insbesondere auf einer Trittschalldämmung, auf dem Rohboden anordbar sind. Hierdurch kann in einfacher Weise eine Ausrichtung der Stammrohrkanäle und eine Anpassung an die bauseits vorgegebene Höhe der Estrichplatte erfolgen. Insbesondere, wenn die Abstützelemente höhenjustierbar ausgebildet sind, kann eine Höhentoleranz des Rohbodens in einfacher Weise ausgeglichen werden.

Ferner ist in bevorzugter Ausgestaltung der Erfindung vorgesehen, dass die Abstützelemente von über die Länge der Stammrohrkanäle beabstandet angeordneten Auflagern (Füßen) gebildet sind, so dass sich freie Durchlassöffnungen unterhalb der Stammrohrkanäle ergeben. Hierdurch wird das Einbringen eines Fließestriches oder dergleichen auf den Rohboden beziehungsweise die Trittschalldämmung durch die Stammrohrkanäle nicht behindert und diese können in einfacher Weise somit in den Estrich eingebracht werden.

Ferner ist in bevorzugter Ausgestaltung der Erfindung vorgesehen, dass den Stammrohrkanälen Verbindungsplatten und/oder Abschlussplatten zugeordnet sind, die die Auflager ausbilden. Diese Verbindungsund/oder Abschlussplatten, die sich im Wesentlichen quer zur Längserstreckung der Stammrohrkanäle erstrecken, dienen einerseits der Erhöhung der Biegesteifigkeit der Stammrohrkanäle. Ferner wird hierdurch in einfacher Weise eine Aneinandermontage mehrerer Stammrohrkanalmodule möglich, bis die gewünschte Gesamtlänge des Stammrohrkanals erzielt ist. Darüber hinaus ist bevorzugt vorgesehen, dass die Verbindungs- und/oder Abschlussplatten zusätzliche, sich im Wesentlichen parallel zur Längserstreckung des Stammrohrkanals ausgerichtete Auflagerbereiche umfassen. Diese Auflagerbereiche verhindern vorteilhaft ein Aufschwimmen der Stammrohrkanäle beim Einbringen von Fließestrich oder dergleichen. Diese zusätzlichen Auflagerbereiche liegen im Wesentlichen plan auf dem Untergrund (Trittschalldämmung, Rohboden) an, so dass der Fließestrich nicht unterhalb dieser Bereiche gelangen kann, sondern diese von oben bedeckt und damit das Aufschwimmen verhindert. Ferner findet durch diese zusätzlichen Auflagerbereiche eine Lastverteilung statt, so dass beispielsweise Beschädigungen der Trittschalldämmungen vermieden werden.

Nach weiterer bevorzugter Ausgestaltung der Erfindung ist vorgesehen, dass die Verbindungs- und/oder Abschlussplatten vorzugsweise wenigstens einen Durchbruch aufweisen. Der wenigstens eine Durchbruch gestattet ein Durchdringen von Fließestrich oder dergleichen. Hierdurch wird eine kraftschlüssige Verankerung des Stammrohrkanals in dem Fließestrich ohne Probleme möglich. Zusätzlich können bevorzugterweise die Platten Zuganker ausbilden, die in die Estrichplatte eingreifen (von dieser umgriffen werden). Hierdurch wird erreicht; dass Druckfestigkeit und Zugfestigkeit der Estrichplatte im Bereich der Stammrohrkanäle nicht beeinträchtigt werden.

In weiterer bevorzugter Ausgestaltung der Erfindung ist vorgesehen, dass die Stammrohrkanäle ein, einen Aufnahmebereich für die Stammrohre ausbildendes Profilelement umfassen, dessen Höhe im Wesentlichen dem Durchmesser der Stammrohre entspricht. Hierdurch wird die Abmessung des Stammrohrkanals auf die Abmessung der Stammrohre optimiert, so dass eine Einbautiefe des Stammrohrkanals in die Estrichplatte auf ein Minimum reduziert ist.

Ferner ist bevorzugt, wenn das Profilelement Positionierhilfen für die Stammrohre umfasst. Hierdurch wird vorteilhaft möglich, eine exakte Ausrichtung der Stammrohre innerhalb der Stammrohrkanäle zu erreichen, so dass eine lagegerechte Anordnung der Kapillarrohrmatten ohne spezielle Justierungen oder dergleichen möglich ist. Die Positionierhilfen bilden gleichzeitig Distanzstücke für die Stammrohre aus, die die Rohre im Stammrohrkanal so auf Distanz voneinander, von den Schenkeln und dem Boden halten, dass sie bei einem späteren Verfüllen des Aufnahmebereiches der Stammrohrkanäle eine vollständige Umhüllung der Stammrohre mit einer Verfüllmasse (Heizund/oder Kühlschicht) erleichtern.

Darüber hinaus ist in bevorzugter Ausgestaltung der Erfindung vorgesehen, dass den Stammrohrkanälen wenigstens ein Zuganker zugeordnet ist. Hierdurch wird vorteilhaft erreicht, dass die Kerbwirkung der Stammrohrkanäle in dem Estrich mittels der Zuganker aufgehoben werden kann. Ferner können über die Zuganker Biegezugkräfte der Estrichplatte übertragen werden. So lässt sich eine einfache Verankerung der Stammrohrkanäle in der Estrichplatte erreichen.

Ferner ist in bevorzugter Ausgestaltung der Erfindung vorgesehen, dass dem Stammrohrkanal wenigstens ein Niederhalter zugeordnet ist, der vorzugsweise von mit den Schenkeln des Profilelementes kraftschlüssig verbindbaren Elementen gebildet ist. Hierdurch wird vorteilhaft erreicht, dass die in den Stammrohrkanälen eingelegten Stammrohre justiert bleiben, also nicht ihre vorbestimmte Position verändern können. Zusätzlich können die Niederhalter Zugkräfte aufnehmen, die im oberen Bereich der Stammrohrkanäle auftreten.

Darüber hinaus ist in bevorzugter Ausgestaltung der Erfindung vorgesehen, dass der Stammrohrkanal, das heißt insbesondere das Profilelement des Stammrohrkanals, aus einem Lochblech oder einem Gitterelement besteht. Hierbei können Lochbleche mit unterschiedlicher Anzahl und Form von Löchern (Öffnungen) beziehungsweise Gitterelemente mit unterschiedlich großen Maschenweiten Einsatz finden. Derartige Lochbleche beziehungsweise Gitterelemente lassen sich in besonders einfacher Weise zu den Stammrohrkanälen verarbeiten. Von einem entsprechend großen, insbesondere flächigen Grundelement kann ein Zuschnitt entsprechend den späteren Abmaßen der Stammrohrkanäle erfolgen und durch nachfolgende Formgebung an die gewünschte Endform der Stammrohrkanäle angepasst werden. Insbesondere ergeben sich hierdurch zwei wesentliche Vorteile. Ein erster Vorteil ist darin zu sehen, dass durch die Verwendung von Lochblechen, Gitterelementen oder dergleichen eine Gewichtsersparnis sowohl beim Transport als auch am späteren Einbauort gegeben ist. Ferner bieten derartige Elemente gegenüber einem geschlossenen Blech den Vorteil, dass zwischen Stammrohrkanal und dem späteren, den Stammrohrkanal aufnehmenden Estrich keine Scherflächen entstehen. Der Estrich dringt - entsprechend der Materialstärke - in die Öffnungen des Lochbleches beziehungsweise der Gitterelemente ein, so dass sich eine form- und kraftschlüssige Verbindung zwischen Stammrohrkanal und Estrich ergibt. Lochbleche oder Gitter wirken somit insbesondere nach Verguss des Stammrohrkanales mit dem Heizestrich wie eine Armierung der schwimmend gelagerten Estrichplatte.

Ferner ist in bevorzugter Ausgestaltung der Erfindung vorgesehen, dass dem Stammrohrkanal ein, die Öffnungen des Lochbleches oder des Gitterelementes zumindest zeitweise und/oder teilweise verschließendes Element zuordbar ist. Durch dieses Element ist vorteilhaft möglich, während des Einbringens des Estriches und somit des Fixierens des Stammrohrkanals in der Estrichschicht zu verhindern, dass Estrich durch die Öffnungen in den späteren Aufnahmeraum für die Stammrohre eintritt. Dieses Element kann vorzugsweise ein Kern, beispielsweise verlorener Kern oder wiederverwendbarer Kern, insbesondere aus Kunststoff, sein. Dieser Kern wird vor Einbringen des Estriches in den Innenraum des Stammrohrkanales eingebracht, so dass verhindert wird, dass Estrich durch die Öffnungen in den Innenraum eindringen kann. Nach Aushärten des Estriches kann der Kern ohne weiteres entnommen werden, so dass der Innenraum für die Aufnahme der Stammrohre frei ist.

Ferner ist bevorzugt, wenn die dem Innenrohr zugewandte Wandung des Stammrohrkanales mit einer Folie ausgekleidet wird. Diese Folie verhindert ebenfalls ein Eindringen von Estrich in den Innenraum und kann nach Aushärten des Estriches ohne weiteres entfernt werden. Um ein Eindringen des Estriches in den Stammrohrkanal von oben bei seiner Einbringung auf den Raumboden zu verhindern, kann der Stammrohrkanal von oben mit einer abziehbaren Folie oder mit einer Abdeckplatte als Montageschutz verschlossen sein. Diese wird dann vor Montage der Kapillarrohrmatte entfernt.

Weitere bevorzugte Ausgestaltungen der Erfindung ergeben sich aus den übrigen, in den Unteransprüchen genannten Merkmalen.

Für die Erfindung wesentlich ist auch, dass die aus Kapillarröhrchen und Stammrohren bestehende Kapillarrohrmatte, gegebenenfalls ein vorgesehenes Tichelmannrohr, und der Stammrohrkanal mit Anschlussstücken für gebäudeseitige Anschlussleitungen eine Einheit bilden. Diese insgesamt als Flächenheizkörper/Flächenkühlkörper bezeichnete Einheit lässt sich mit großen Freiheitsgraden in Flächenelementen von Gebäuden integrieren. Durch den strukturierten Aufbau lässt sich insbesondere auch ein Flächenheizkörper mit Kühloption erzielen. Ein Anschluss des Flächenheizkörpers beziehungsweise des Flächenkühlkörpers kann in einfacher Weise an gebäudeseitig verlegte Anschlüsse konventioneller Heiztechnik, beispielsweise Etagenverteilungstechniken oder senkrechte Verteilungstechniken, erfolgen.

Der Stammrohrkanal ist so ausgebildet, dass er als Armierung der schwimmend gelagerten Estrichplatte wirkt und so die Schwächung der Estrichplatte durch die in ihr untergebrachten Stammrohre kompensiert beziehungsweise überkompensiert. Im Ergebnis kann man also die Stammrohre innerhalb der Estrichplatte unterbringen, ohne sie - wie in den derzeitigen DIN-Normen vorgeschrieben - deshalb auf der ganzen Fläche dicker, beziehungsweise höher, zu machen (geforderte Überdeckung eines eingelegten Rohres, speziell bei Fußbodenheizung).

Die Erfindung wird nachfolgend in Ausführungsbeispielen anhand der zugehörigen Zeichnungen näher erläutert. Es zeigen:
- Figur 1: eine schematische Perspektivansicht eines Stammrohrkanals mit Kapillarrohrmatte;
- Figur 2: eine Schnittdarstellung des Stammrohrkanals;
- Figur 2a: eine schematische Schnittdarstellung durch einen Bodenaufbau;
- Figur 3: verschiedene Ansichten von Verbindungsplatten;
- Figur 4: verschiedene Ansichten von Abschlussplatten;
- Figur 5: eine Draufsicht auf einen Stammrohrkanal und
- Figuren 6 bis 8: Ansichten eines Stammrohrkanals für eine Wand- oder Deckenmontage.
- Figuren 9 bis 11: schematische Schnittdarstellungen von Stammrohrkanälen.

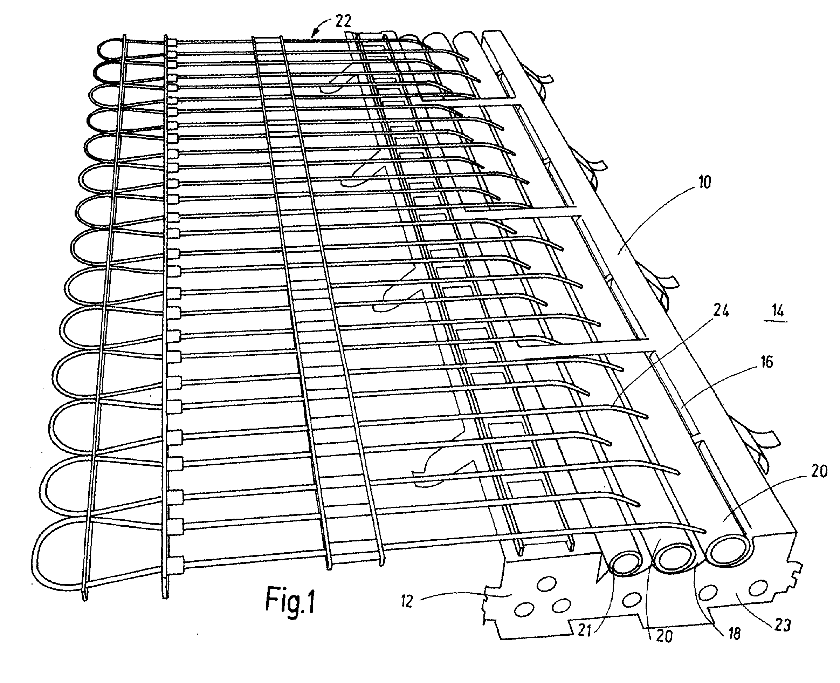

Figur 1 zeigt eine schematische Perspektivansicht eines Stammrohrkanals 10. Der Stammrohrkanal 10 ist über Stützelemente 12 auf der Trittschalldämmung eines Rohbodens 14 angeordnet. Nachfolgend wird immer von Rohboden 14 gesprochen, wobei klar ist, dass eine zusätzliche Trittschalldämmung im Regelfall zwischen Rohboden 14 und Stammrohrkanal 10 angeordnet ist. Die Stützelemente 12 sind Bestandteil von Verbindungsplatten 23 und Abschlussplatten, auf die später noch Bezug genommen wird. Der Rohboden 14 ist beispielsweise die Unterkonstruktion einer Geschossdecke in Gebäuden oder dergleichen. Der Stammrohrkanal 10 wird von einem Profilelement 16 gebildet, das einen Aufnahmebereich 18 für Stammrohre 20 einer insgesamt mit 22 bezeichneten Kapillarrohrmatte ausbildet. Die Kapillarrohrmatte 22 umfasst bekannterweise Kapillarröhrchen 24, die mit den als Verteilerrohr oder Sammlerrohr ausgebildeten Stammrohren 20 verbunden sind. Ferner nimmt der Stammrohrkanal 10 ein so genanntes Tichelmannrohr 21 auf. Das Tichelmannrohr 21 bildet ein Rücklaufrohr, das dazu dient, dass bei einseitigem Anschluss der Kapillarrohrmatte 22 die einzelnen Kapillarröhrchen 24 im Tichelmannsystem geschaltet sind. Hierbei ergeben sich für den Mediendurchtritt, beispielsweise von Heizwasser, durch die einzelnen Kapillarröhrchen 24 gleich lange Wege und damit ein gleich großer Druckverlust innerhalb der Kapillarrohrmatte 22. Bei zweiseitigem Anschluss der Kapillarrohrmatte 22 kann auf das Tichelmannrohr 21 verzichtet werden. Aufbau und Funktion derartiger Kapillarrohrmatten 22 sind allgemein bekannt, so dass im Rahmen der vorliegenden Beschreibung hierauf nicht näher eingegangen wird.

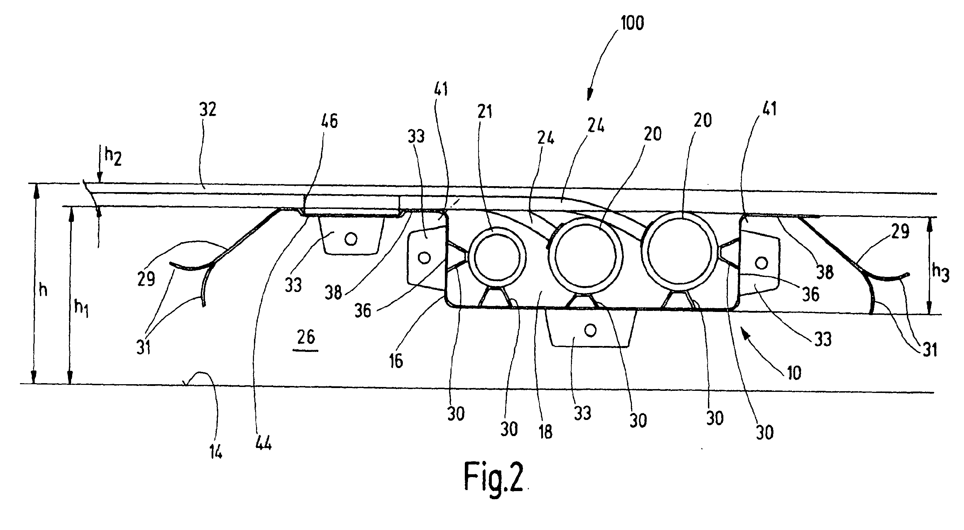

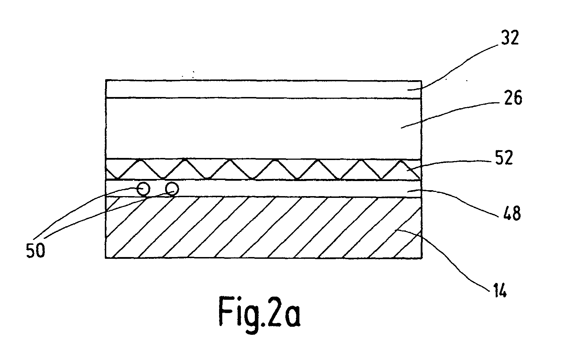

Der Stammrohrkanal 10 wird in eine Estrichschicht 26 eingebettet, während die Kapillarrohrmatte 22 in eine Heiz- und/oder Kühlschicht 32 eingebettet wird. Hierauf wird anhand der Figur 2 noch näher eingegangen.

Figur 2 zeigt eine schematische Schnittdarstellung durch die Flächenheiz- und/oder -kühleinrichtung 100. Gleiche Teile wie in Figur 1 sind mit gleichen Bezugszeichen versehen und nicht nochmals erläutert.

Anhand der Schnittdarstellung wird deutlich, dass der Stammrohrkanal 10 Positionierhilfen 30 umfasst, die mit dem Profilelement 16 verbunden sind und in den Aufnahmebereich 18 für die Stammrohre 20 und das Tichelmannrohr 21 einkragen. Die Positionierhilfen 30 führen zu einer Einpunkt- beziehungsweise Zweipunkt-Auflage der Stammrohre 20 und des Tichelmannrohres 21 und gestatten bei an sich bekanntem, standardisiertem Durchmesser des Stammrohres 20 eine selbstjustierende Montage der Kapillarrohrmatten 22. Eine Höhe h₃ des Profilelementes 16 ist hierbei so bemessen, dass die Stammrohre 20 unterhalb der Montageebene der Kapillarröhrchen 24 angeordnet sind. Die Positionierhilfen 30 bilden gleichzeitig Abstandshalter für die Rohre 20 und 21 zum Profilelement 16, so dass ein späteres vollständiges Umschließen der Rohre 20, 21 mit einer Verfüllmasse (Heiz- und/oder Kühlschicht 32) im Stammrohrkanal 10 gewährleistet ist.

Die Schnittdarstellung in Figur 2 verdeutlicht, wie der Stammrohrkanal 10 innerhalb der Estrichschicht 26 angeordnet ist. Auf die Darstellung einer Verbindungsplatte und/oder Anschlussplatte - über die der Stammrohrkanal 10 auf der Trittschalldämmung (Rohboden 14) abgestützt ist - wurde aus Gründen der Übersichtlichkeit verzichtet. Besonders deutlich wird, wie Zuganker 29 von der Estrichschicht 26 umschlossen werden. Diese Zuganker 29, insbesondere mit ihren krallenförmigen Enden 31, unterstützen die Armierungswirkung des Stammrohrkanals 10, so dass die Biegezugfestigkeit und Druckfestigkeit der Estrichschicht 26 trotz ihrer teilweisen Schwächung durch die drei Rohre im Bereich des Stammrohrkanals 10 erhalten bleibt.

In Figur 2 sind ferner Befestigungslaschen 33 dargestellt, über die eine Befestigung der Verbindungsplatten 23 beziehungsweise der Abschlussplatten an den Stammrohrkanälen 10 erfolgt. Hierbei können Gewindebohrungen in den Befestigungslaschen 33 vorgesehen sein, so dass ein Verschrauben der Platten mit dem Stammrohrkanal 10 möglich ist. Selbstverständlich sind auch andere Verbindungstechniken, beispielsweise Schweißen, auch ohne Befestigungslaschen, Kleben, Einrasten oder dergleichen, möglich.

Die Stammrohrkanäle 10 bestehen vorzugsweise aus verzinktem oder lackiertem Stahlblech, Aluminium, Kunststoff (zum Beispiel als Spritzgussteile) oder Kupfer, die entsprechend der Ausbildung der Profilelemente 16 als Biegeteile ausgebildet sind. Hierbei können abgerundete Kanten 41 geschaffen werden, so dass eine Verletzung der Kapillarröhrchen 24 beziehungsweise der Stammrohre 20 ausgeschlossen werden kann. Insbesondere wird ein scharfkantiger Übergang zwischen den Schenkeln 36 und den oberen, im Wesentlichen horizontalen Abschlussschenkeln 38 vermieden. Die Schenkel 38 sind symmetrisch oder asymmetrisch ausgebildet. Bei asymmetrischer Ausbildung ist der kapillarrohrseitige Schenkel 38 ist länger und dient gleichzeitig der Auflage und Befestigung der Kapillarrohrmatte 22. Dieser Schenkel 38 besitzt eine Aufnahmenut 44 zum Einlegen einer Abstandshalterleiste 46 der Kapillarrohrmatte 22.

In Figur 2a ist nochmals schematisch der typische Bodenaufbau gezeigt, wie er beim Einsatz der erfindungsgemäßen Flächenheiz- und/oder -kühleinrichtung Verwendung findet. Auf dem Rohboden 14 ist eine Ausgleichschicht 48 aufgebracht, innerhalb der die gebäudeseitigen Anschlussrohre 50 (Vorlauf, Rücklauf) angeordnet sind. Auf der Ausgleichschicht 48 befindet sich eine Trittschalldämmung 52, auf der die Stammrohrkanäle 10 angeordnet werden. Diese sind dann in der Estrichschicht 26 integriert, auf die die Heizund/oder Kühlschicht 32 aufgebracht wird. Die Kapillarrohrmatten liegen zwischen der Estrichschicht 26 und der Heiz- und/oder Kühlschicht 32. Sie sind damit dicht an der Oberfläche, was - wie bereits erläutert - gewünscht ist.

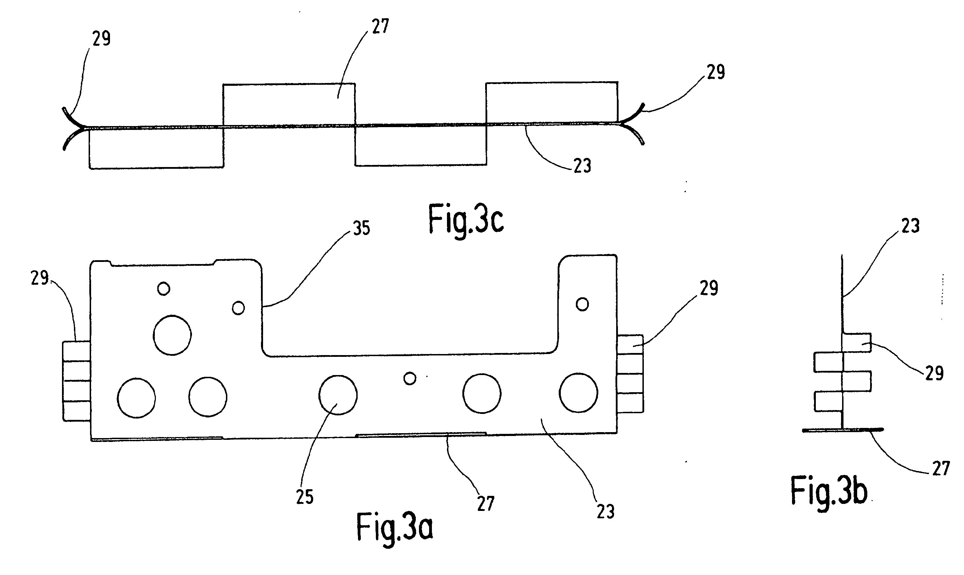

Die Figuren 3a, 3b und 3c zeigen verschiedene Ansichten einer Verbindungsplatte 23, mittels denen die Montage der Stammrohrkanäle 10 auf den Rohboden 14 erfolgt. Figur 3a zeigt hierbei eine Vorderansicht, Figur 3b eine Seitenansicht und Figur 3c eine Draufsicht. Anhand der Vorderansicht wird deutlich, dass die Verbindungsplatte 23 Durchbrüche 25 besitzt. An ihrer dem Rohboden 14 zugewandten Seite besitzt die Verbindungsplatte 23 Auflagerbereiche 27, die eine flächige Abstützung auf dem Rohboden 14 gestatten. Ferner sind Zuganker 29 zu erkennen.

Die Durchbrüche 25 gestatten einen Durchtritt des Fließestriches 26, so dass eine kraftschlüssige Einbindung der Verbindungsplatten 23 und somit der mit diesen verbundenen Stammrohrkanäle 10 in die Estrichschicht 26 gewährleistet ist. Die Auflagerbereiche 27 verhindern gleichzeitig ein Aufschwimmen der Stammrohrkanäle 10 beim Einbringen des Fließestrichs 26. Dieser kommt oberhalb der Auflagerbereiche 27 mit den Verbindungsplatten 23 in Kontakt, so dass diese durch das Gewicht und die Zähigkeit des Estrichs gegen den Rohboden 14 gedrückt werden. Gleichzeitig dienen die Auflagerbereiche 27 zur Lastverteilung auf der Trittschalldämmung, so dass eine Beschädigung der Trittschalldämmung verhindert wird. Die ferner vorgesehenen Zuganker 29 werden von der Estrichschicht 26 umgriffen, so dass eine Zugfestigkeit der Estrichschicht 26 im Bereich der Stammrohrkanäle 10 nicht beeinträchtigt wird. Die Zuganker 29 übertragen Biegezugkräfte des Estrichs und kompensieren quasi die Querschnittsschwächung der Estrichschicht 26 durch den Stammrohrkanal 10.

In Figur 3a wird ferner eine Aussparung 35 deutlich, die dem Querschnitt des Aufnahmebereiches 18 des Stammrohrkanals 10 entspricht. Somit behindern die Verbindungsplatten 23 nicht das spätere Verlegen der Stammrohre 20 beziehungsweise des Tichelmannrohres 21.

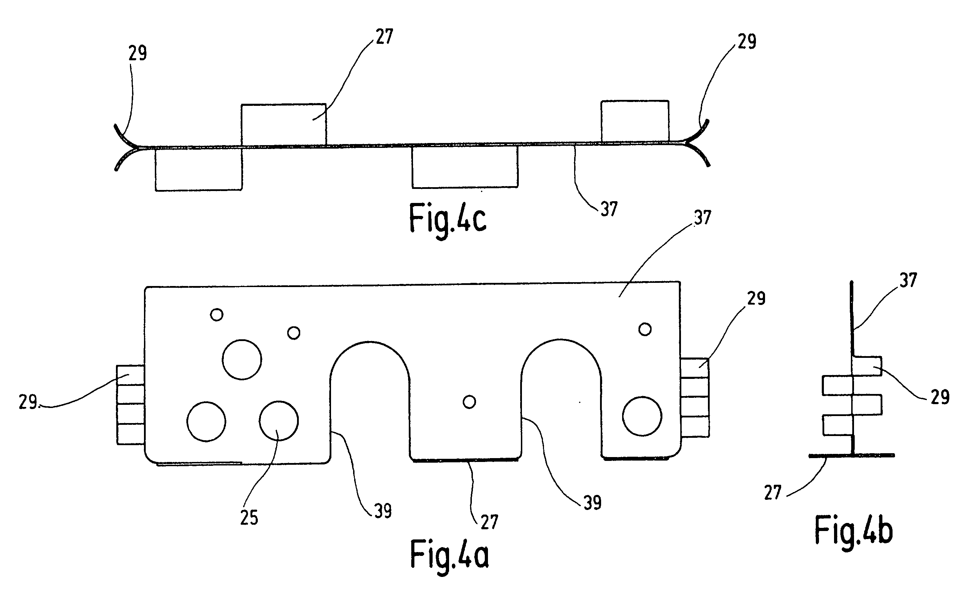

In den Figuren 4a, 4b und 4c sind Ansichten einer Abschlussplatte 37 gezeigt, die im Wesentlichen dem Aufbau der Verbindungsplatten 23 entspricht. Insofern wird nur auf Unterschiede eingegangen. Anstelle des Durchbruchs 35 besitzen die Abschlussplatten 37 Durchbrüche 39, die einen Anschluss der Stammrohre 20 an eine gebäudeseitige Zu- und Ableitung (Vorlauf und Rücklauf) gestatten.

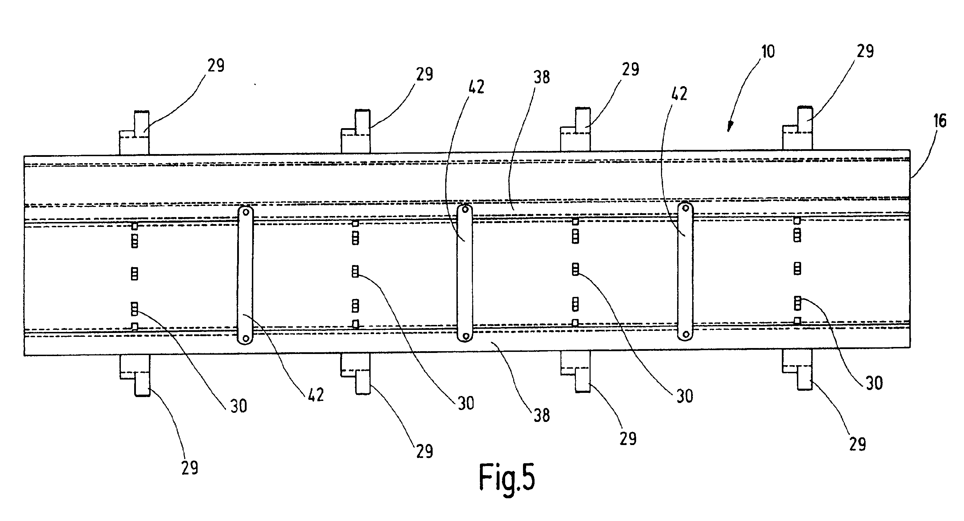

Figur 5 zeigt eine Draufsicht auf einen Stammrohrkanal 10. Gleiche Teile wie in den vorhergehenden Figuren sind mit den gleichen Bezugszeichen versehen und nicht nochmals erläutert. In der Draufsicht wird die beabstandete Anordnung der Zuganker 29 deutlich. Hierdurch wird die Verankerung in der Estrichschicht 26 gewährleistet und gleichzeitig der Einbauraum unterhalb des Profilelementes 16 für die Fließfront eines einzubringenden Estrichs freigehalten. Ferner sind die in etwa der gleichen Flucht mit dem Zuganker 29 angeordneten Positionierhilfen beziehungsweise Abstandshalter 30 zu erkennen. Ferner verdeutlicht diese Draufsicht, dass zwischen den Schenkeln 38 Niederhalter 42 angeordnet sind. Diese Niederhalter 42 umspannen den Aufnahmebereich 18 des Profilelementes 16. Niederhalter 42 erfüllen den Zweck, dass nach zuvor eingelegten Kapillarrohrmatten 22 die Stammrohre 20 und gegebenenfalls das Tichelmannrohr 21 in ihrer eingenommenen Position gehalten werden. Insbesondere wird ein Aufschwimmen der Stammrohre 20 während des Aufbringens der Heiz- und/oder Kühlschicht 32 durch die Niederhalter 42 verhindert. Die Niederhalter 42 werden nach Einlegen der Kapillarrohrmatten 22 angebracht. Diese können beispielsweise an das Profilelement 16 geschraubt, geklebt, eingerastet oder dergleichen werden. Um eine besonders exakte Fixierung der Stammrohre 20 und des Tichelmannrohres 21 zu erlangen, kann vorgesehen sein, dass die Niederhalter 42 eine den Rohren 20 beziehungsweise 21 angepasste Kontur besitzen, wie dies in der Perspektivansicht in Figur 1 deutlich wird. Hierdurch wird eine relativ große Auflagefläche zwischen Niederhalter 42 und den Außenumfängen der Rohre 20 und 21 erhalten.

Bei der Montage der Flächenheiz- und/oder -kühleinrichtung 100 wird folgendermaßen vorgegangen:

Nach Verlegung der gebäudeseitigen Zu- und Ableitungen (Vorlauf, Rücklauf) werden auf der Rohdecke Ausgleichschicht und Trittschalldämmung aufgebracht. Die Vor- und Rücklaufleitungen werden durch vorgesehene Aussparungen im Boden der Stammrohrkanäle 10 in diese eingeführt, so dass eine Verbindung mit den Stammrohren 20 möglich ist. Die Stammrohrkanäle 10 selber werden auf eine Trittschalldämmung aufgelegt und beispielsweise durch Kleben, Nageln, Stiften (oder dergleichen) dort befestigt. Insbesondere kann vorgesehen sein, die Stützelemente 12 höhenjustierbar auszuführen, so dass ein Toleranzausgleich erfolgen kann. Ferner ist eine schallentkoppelte Anordnung der Stammrohrkanäle 10 auf dem Rohboden möglich.

Der Stammrohrkanal 10 beziehungsweise die Stammrohrkanäle 10 werden auf dem Rohboden 14 (Trittschalldämmung) gemäß einem Verlegeplan der Kapillarrohrmatten 22 positioniert. Nachfolgend wird auf den Rohboden 14 die Estrichschicht 26, beispielsweise durch Einbringen von Fließestrich, aufgebracht. Die Estrichschicht besitzt eine Höhe h₁ und schließt mit der Oberkante des Stammrohrkanals 10 ab. Der Stammrohrkanal 10 ist somit quasi in die Estrichschicht 26 eingelassen. Hierbei dient der Stammrohrkanal 10 gleichzeitig als Armierung für die Estrichschicht 26.

Anschließend wird die Kapillarrohrmatte 22 auf die Estrichschicht 26 (nach deren Aushärten) aufgebracht. Hierbei werden die Stammrohre 20 in den Stammrohrkanal 10 eingelegt und die Kapillarrohre 24 liegen flächig auf der Estrichschicht 26 auf. Die gebäudeseitigen Zu- beziehungsweise Ableitungen (Vor- und Rücklauf) werden mit den Verteil- beziehungsweise Sammlerrohren 20 verbunden. Anschließend wird die Heiz- und/oder Kühlschicht 32 aufgebracht, so dass einerseits der Stammrohrkanal 10 ausgefüllt wird und die Kapillarrohrmatte 22 komplett in die Heizund/oder Kühlschicht 32 integriert ist. Der gesamte Schichtaufbau mit der Höhe h ergibt sich somit aus den Teilhöhen h₁ der Estrichschicht 26 und der Teilhöhe h₂ der Kühl- und/oder Heizschicht 32.

Insgesamt lässt sich die erfindungsgemäße Flächenheiz- und/oder -kühleinrichtung 100 ohne zusätzliche konstruktive Maßnahmen im Wohnungsbau, Gewerbebau oder - allgemein gesagt - dem Geschossflächenbau einsetzen. Die Flächenheiz- und/oder -kühleinrichtung 100 kommt mit normalen Bodenaufbauhöhen ohne Fußbodenheizung aus. Somit kann eine Entscheidung über die Art des Heizungssystems, beispielsweise der Einsatz der erfindungsgemäßen Flächenheiz- und/oder -kühleinrichtung 100, zu einem relativ späten Zeitpunkt der Bauphase, getroffen werden. Nicht bereits bei der Rohbauplanung, das heißt bei der Festlegung der Gebäudehöhen, sondern beispielsweise erst beim Vorentwurf der Haustechnikplanung kann die entsprechende Entscheidung getroffen werden. Änderungen des Heizsystems sind sogar noch im Entwurfsstadium der Architektenplanung möglich. Ferner wird ohne weiteres ein Einsatz bei Altbausanierungen möglich. Ein Anschluss ist an alle bekannten Heizkreis- oder Kühlkreisverteilsysteme möglich.

Entsprechend der zu beheizenden beziehungsweise der zu kühlenden Fläche können die Stammrohrkanäle 10 in Standardlängen geliefert werden und sind aneinander reihbar. Eine Standardlänge kann beispielsweise 600 mm (auch andere Längen sind möglich) betragen. Eine Höhe h₃ der Stammrohrkanäle 10 beträgt beispielsweise 25 mm und eine Breite des Aufnahmebereiches 18 beträgt beispielsweise 80 bis 100 mm. Die Stammrohrkanäle 10 liegen somit als Moduleinheiten vor, die sich zur gewünschten Gesamtlänge aneinander reihen lassen. Zwischen den Modulen ist jeweils eine Verbindungsplatte (Figur 3) angeordnet, über die auch eine Abstützung der Stammrohrkanäle 10 auf der Trittschalldämmung (Rohboden 14) erfolgt. An den jeweiligen Enden sind Abschlussplatten (Figur 4) vorgesehen, über die ebenfalls eine Abstützung auf der Trittschalldämmung erfolgt.

Anhand der vorhergehenden Figuren wurde Aufbau und Funktion einer Flächenheiz- und/oder -kühleinrichtung 100 für eine Fußbodenmontage beschrieben. In analoger Weise kann die Flächenheiz- und/oder -kühleinrichtung 100 in Wände und/oder Decken von Gebäude integriert werden. Bei einer Wandmontage kann der Stammrohrkanal 10 in entsprechende senkrechte und/oder waagerechte und/oder unter einem Winkel verlaufende Wandschlitze eingebracht werden. Nach Einlegen der Kapillarrohrmatten 22 erfolgt ein Überputzen der Wand, so dass die Flächenheiz- und/oder -kühleinrichtung 100 in der Wand integriert ist.

Vorzugsweise bei der Deckenmontage, jedoch auch bei Wand- oder Bodenmontage, können die Stammrohrkanäle 10 beispielsweise als zum Raum offene, verlorene Schalungen eingebaut werden.

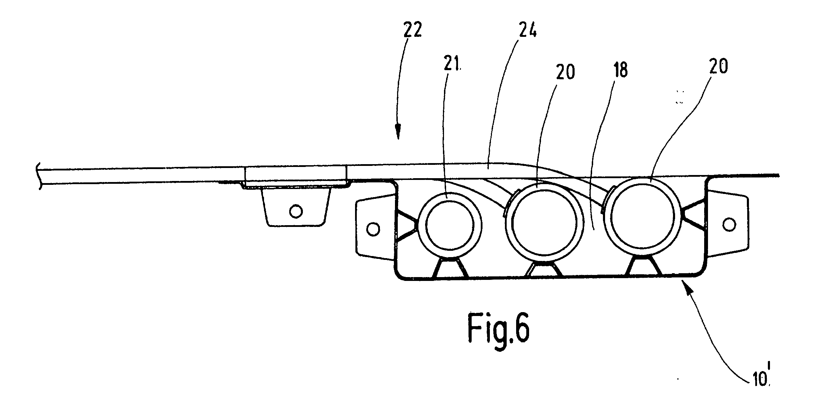

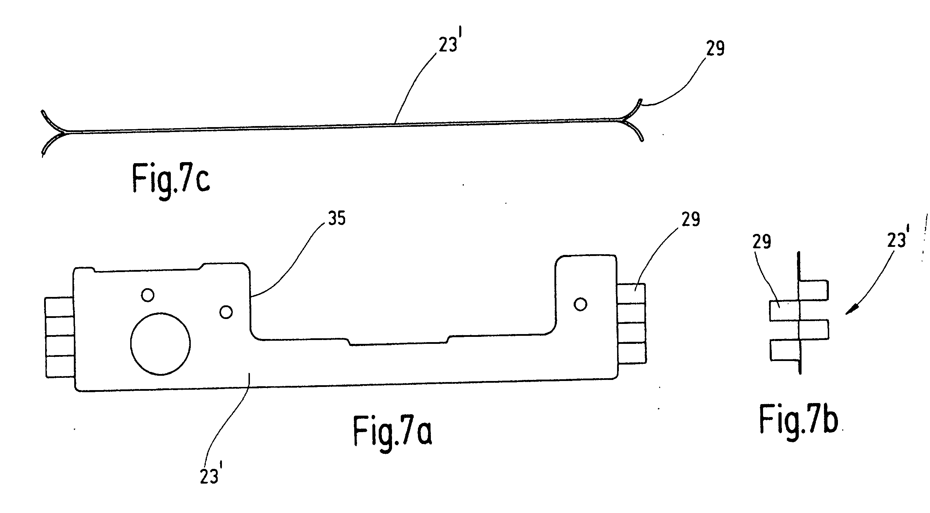

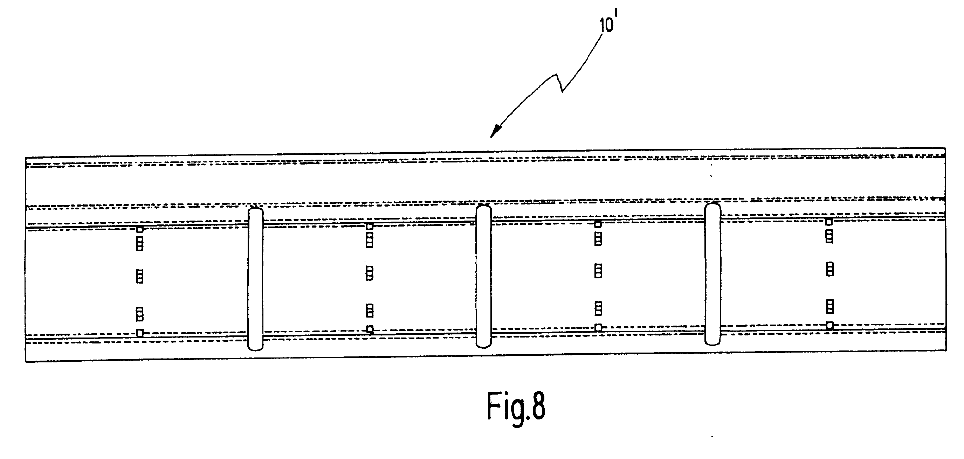

Für die Wand- und Deckenmontage werden in der Regel keine Anforderungen an die Belastbarkeit des Stammrohrkanals 10 zur Übernahme von Gebäudelasten gestellt. Somit kann vom Grundprinzip her der für die Bodenmontage - zum Einlassen in eine Estrichplatte - eingesetzte Stammrohrkanal 10 eingesetzt werden, wobei auf die Zuganker 29 am Stammrohrkanal 10 und die Auflagerbereiche 27 an den Verbindungsplatten 23 beziehungsweise Abschlussplatten 27 verzichtet werden kann. In den Figuren 6 bis 8 sind jeweils ein Stammrohrkanal 10' sowie eine Verbindungsplatte 23' gezeigt. Gleiche Teile mit gleicher Funktion wie bei den Stammrohrkanälen 10 für die Fußbodenmontage sind jeweils mit gleichen Bezugszeichen versehen und nicht nochmals erläutert. Figur 6 zeigt hierbei eine Schnittdarstellung und Figur 8 eine Draufsicht auf den Stammrohrkanal 10', während die Figuren 7a, 7b und 7c verschiedene Ansichten der Verbindungsplatte zeigen.

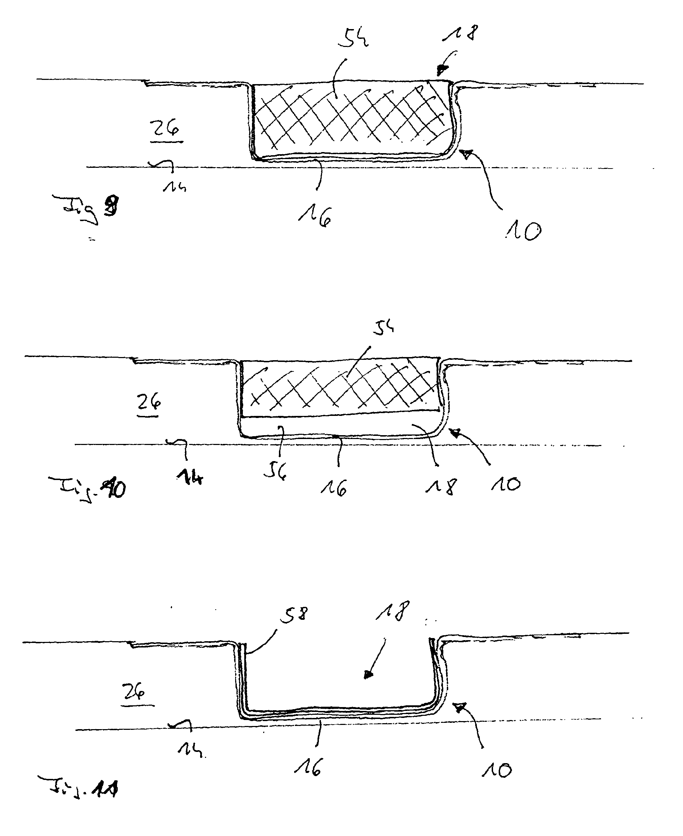

In den Figuren 9 bis 11 sind jeweils schematische Schnittdarstellungen von Stammrohrkanälen 10 dargestellt. Hierbei wurde auf die Darstellung von Details verzichtet, da diese in den vorhergehenden Figuren ausreichend erläutert sind.

Das Profilelement 16 der Stammrohrkanäle 10 kann beispielsweise aus einem Lochblech oder einem Gitterelement bestehen. Bei dem Lochblech sind über die Fläche verteilt eine Vielzahl von Löchern, die gleiche oder unterschiedliche Größen beziehungsweise gleiche oder unterschiedliche Formen aufweisen können, angeordnet. Beim Gitterelement ist ebenfalls eine unterschiedliche Maschenweite wählbar. Entscheidend bei diesen beiden Ausführungsvarianten ist, dass ein Mindestmaß an Eigenstabilität des Stammrohrkanales für Transport und Montage gegeben ist. Die aus Lochblech beziehungsweise Gitterelementen vorgefertigten, insbesondere vorgeformten Stammrohrkanäle 10 können derart auf die Baustelle angeliefert werden und entsprechend auf dem Rohboden 14 angeordnet werden.

In den späteren Aufnahmebereich 18 ist, gemäß Figur 9, ein Kern 54 eingebracht. Der Kern 54 besteht beispielsweise aus einem Kunststoff. Die Außenkontur des Kernes 54 ist hierbei der Innenkontur des Aufnahmebereiches 18 angepasst, so dass der Kern 54 den Aufnahmebereich 18 vollständig einnimmt. Die Anordnung des Kernes 54 führt dazu, dass beim Einbringen der Estrichschicht 26, in der Regel als Fließestrich, dieser nicht durch die Löcher des Lochbleches beziehungsweise die Maschen des Gitterelementes in den Aufnahmebereich 18 eindringen kann. Nachdem die Estrichschicht 26 soweit abgebunden hat, dass diese nicht mehr fließfähig ist, kann der Kern 54 entfernt werden, so dass der Aufnahmebereich 18 für die spätere, bereits anhand der vorhergehenden Figuren ausreichend erläuterten Anordnung der Stammrohre 20 freigehalten ist.

Figur 10 zeigt eine Ausführungsvariante, bei der der Kern 54 den späteren Aufnahmebereich 18 nicht vollständig ausfüllt. Hier ist ein Teilbereich 56 nicht mit dem Kern 54 ausgefüllt. Dies hat zur Folge, dass bei Einbringen der Estrichschicht 26 in diesen Teilbereich 56 durch die Löcher des Lochbleches beziehungsweise die Maschen des Gitterelementes Estrich definiert in den späteren Aufnahmebereich 18 eindringen kann. Hierbei kann eine Höhe des Teilbereiches 56 so gewählt sein, dass es gleichzeitig zur Ausbildung von Positionierhilfen (Positionierhilfen 30) kommt. Ferner wird hierdurch eine bessere Verankerung des Profilelementes 16 in der Estrichschicht 26 erreicht, da der Grundschenkel des Profilelementes 16 komplett von der Estrichschicht 26 umschlossen ist.

Schließlich zeigt Figur 11 eine weitere Ausführungsvariante, bei der der spätere Aufnahmebereich 18 des Profilelementes 16 mit einer Folie 58 ausgekleidet ist. Diese Folie, beispielsweise eine selbstklebende Folie oder dergleichen, verhindert ebenfalls ein Eindringen von Estrich in den späteren Aufnahmebereich 18. Nachdem die Estrichschicht 26 ausgehärtet ist, kann die Folie 58 abgezogen werden, so dass der komplette gewünschte Aufnahmebereich 18 zur Verfügung steht.

Beim Einbringen und Glattstreichen des Estrichs auf dem Boden kann bei einer Ausbildung gemäß Figur 11 Estrich von oben in den nach oben offenen Stammrohrkanal eindringen. Um dies zu verhindern, kann er für Montagezwecke oben mit einer weiteren abziehbaren Folie oder einem abnehmbaren provisorischen Deckel verschlossen werden.

### Bezugszeichenliste

- 10: Stammrohrkanal
- 10': Stammrohrkanal
- 12: Stützelemente
- 14: Rohboden
- 16: Profilelement
- 18: Aufnahmebereich
- 20: Stammrohre
- 21: Tichelmannrohr
- 22: Kapillarrohrmatte
- 23: Verbindungsplatten
- 23': Verbindungsplatte
- 24: Kapillarröhrchen
- 25: Durchbruch
- 26: Estrichschicht
- 27: Auflagerbereiche
- 29: Zuganker
- 30: Positionierhilfen
- 31: Ende
- 32: Heiz-/Kühlschicht
- 33: Befestigungslaschen
- 35: Aussparung
- 36: Schenkel
- 37: Abschlussplatte
- 38: Schenkel
- 39: Durchbrüche
- 41: Kanten
- 42: Niederhalter
- 44: Aufnahmenut
- 46: Abstandshalterleiste
- 48: Ausgleichschicht
- 52: Trittschalldämmung
- 54: Kern
- 56: Teilbereich
- 58: Folie

- 100: Flächenheiz- und/oder -kühleinrichtung

## Patentansprüche

1. Flächenelement eines Gebäudes mit einer integrierten Flächenheiz- und/oder -kühleinrichtung (100), mit wenigstens einer Kapillarrohrmatte (22), deren Kapillarrohre (24) mit als Verteiler- und Sammlerrohren ausgebildete Stammrohre (20) verbunden sind, wobei die wenigstens eine Kapillarrohrmatte (22) in das Flächenelement des Gebäudes integriert ist und deren Stammrohre (20) mit gebäudeseitigen Zu- beziehungsweise Ableitungen verbindbar sind, **dadurch gekennzeichnet, dass**
ein Stammrohrkanal (10) zur Aufnahme der Stammrohre (20), unabhängig von den Stammrohren (20) und der wenigstens einen Kapillarrohrmatte (22) in eine Estrichschicht (26) in das Flächenelement integriert ist und die wenigstens eine Kapillarrohrmatte (22) mit den Stammrohren (20) von einer eine Heiz- und/oder Kühlschicht (32) abgedeckt ist, so dass sie vollständig in das Flächenelement integriert sind, wobei die Heiz- und/oder Kühlschicht auf die Estrichschicht (26) aufgebracht ist.

2. Flächenheiz- und/oder -kühleinrichtung nach einem der vorhergehenden Ansprüche, **dadurch gekennzeichnet, dass** der Stammrohrkanal (10) um seine Längsachse und seine Querachse biegesteif in das Flächenelement integriert ist.

3. Flächenheiz- und/oder -kühleinrichtung nach einem der vorhergehenden Ansprüche, **dadurch gekennzeichnet, dass** der Stammrohrkanal (10) über Stützelemente (12) auf einem Rohboden (14) angeordnet ist.

4. Flächenheiz- und/oder -kühleinrichtung nach Anspruch 3, **dadurch gekennzeichnet, dass** die Stützelemente (12) von Verbindungsplatten (23) und/oder Abschlussplatten (27) gebildet sind.

5. Flächenheiz- und/oder -kühleinrichtung nach Anspruch 3, **dadurch gekennzeichnet, dass** die Stützelemente (12) wenigstens einen Durchbruch (25) aufweisen.

6. Flächenheiz- und/oder -kühleinrichtung nach einem der vorhergehenden Ansprüche, **dadurch gekennzeichnet, dass** die Stützelemente (12) quer zur Längsachse des Stammrohrkanals (10) wirkende Zuganker (29) ausbilden.

7. Flächenheiz- und/oder -kühleinrichtung nach einem der vorhergehenden Ansprüche, **dadurch gekennzeichnet, dass** die Stützelemente (12) Auflagerbereiche (27) aufweisen.

8. Flächenheiz- und/oder -kühleinrichtung nach einem der vorhergehenden Ansprüche, **dadurch gekennzeichnet, dass** der Stammrohrkanal (10) beziehungsweise die Stützelemente (12) höhenjustierbar sind.

9. Flächenheiz- und/oder -kühleinrichtung nach einem der vorhergehenden Ansprüche, **dadurch gekennzeichnet, dass** der Stammrohrkanal (10) von einem einen Aufnahmebereich (18) für die Stammrohre (20) ausbildenden Profilelement (16) gebildet ist, dessen Höhe (h₃) größer/gleich einem Durchmesser der Stammrohre (20) ist.

10. Flächenheiz- und/oder -kühleinrichtung nach einem der vorhergehenden Ansprüche, **dadurch gekennzeichnet, dass** das Profilelement (16) vorzugsweise als Abstandshalter ausgebildete Positionierhilfen (30) für die Stammrohre (20) umfasst.

11. Flächenheiz- und/oder -kühleinrichtung nach einem der vorhergehenden Ansprüche, **dadurch gekennzeichnet, dass** dem Stammrohrkanal (10) wenigstens ein Zuganker (29) zugeordnet ist.

12. Flächenheiz- und/oder -kühleinrichtung nach Anspruch 12, **dadurch gekennzeichnet, dass** der wenigstens eine Zuganker (40) von mit Schenkeln (38) des Stammrohrkanals (10) kraftschlüssig verbundenen Elementen gebildet ist.

13. Flächenheiz- und/oder -kühleinrichtung nach einem der vorhergehenden Ansprüche, **dadurch gekennzeichnet, dass** dem Stammrohrkanal (10) wenigstens ein Niederhalter (42) für die Stammrohre (20) zugeordnet ist.

14. Flächenheiz- und/oder -kühleinrichtung nach einem der vorhergehenden Ansprüche, **dadurch gekennzeichnet, dass** der Stammrohrkanal (10) aus einem Lochblech besteht.

15. Flächenheiz- und/oder -kühleinrichtung nach einem der vorhergehenden Ansprüche, **dadurch gekennzeichnet, dass** der Stammrohrkanal (10) aus einem Gitterelement besteht.

16. Flächenheiz- und/oder -kühleinrichtung nach einem der vorhergehenden Ansprüche, **dadurch gekennzeichnet, dass** dem Stammrohrkanal (10) ein die Öffnungen des Lochbleches oder des Gitterelementes zumindest zeitweise und/oder teilweise verschließendes Element zuordbar ist.

17. Flächenheiz- und/oder -kühleinrichtung nach einem der vorhergehenden Ansprüche, **dadurch gekennzeichnet, dass** das Element ein den Innenraum des Stammrohrkanals zumindest teilweise ausfüllender Kern (54) ist.

18. Flächenheiz- und/oder -kühleinrichtung nach einem der vorhergehenden Ansprüche, **dadurch gekennzeichnet, dass** das Element eine an der Innenseite des Stammrohrkanals (10) anbringbare Folie oder dergleichen ist.

## Claims

1. A surface element of a building with an integrated surface heating and/or cooling device (100), with at least one capillary tube mat (22), the capillary tubes (24) of which are connected with trunk tubes (20) which are designed as distribution and collection tubes, wherein the at least one capillary tube mat (22) is integrated into the surface element of the building, and its trunk tubes (20) are connectable with supply or drainage pipes on the building, **characterized in that** a trunk tube channel (10) for retaining the trunk tubes (20), independently of the trunk tubes (20) and the at least one capillary tube mat (22) is integrated into a screed layer (26) in the surface element, and the at least one capillary tube mat (22) with the trunk tubes (20) is covered by a heating and/or cooling layer (32), so that they are fully integrated into the surface element, wherein the heating and/or cooling layer is applied onto the screed layer (26).

2. A surface heating and/or cooling device according to any one of the preceding claims, **characterized in that** the trunk tube channel (10) is integrated around its longitudinal axis and its traverse axis into the surface element in such a manner that it is bend-proof.

3. A surface heating and/or cooling device according to any one of the preceding claims, **characterized in that** the trunk tube channel (10) is arranged using supporting elements (12) on a rough base (14).

4. A surface heating and/or cooling device according to claim 3, **characterized in that** the supporting elements (12) are formed from connecting plates (23) and/or closing plates (27).

5. A surface heating and/or cooling device according to claim 3, **characterized in that** the supporting elements (12) comprise at least one aperture (25).

6. A surface heating and/or cooling device according to any one of the preceding claims, **characterized in that** the supporting elements (12) form tension anchors (29) which act traversely to the longitudinal axis of the trunk tube channel (10).

7. A surface heating and/or cooling device according to any one of the preceding claims, **characterized in that** the supporting elements (12) comprise bearing areas (27).

8. A surface heating and/or cooling device according to any one of the preceding claims, **characterized in that** the trunk tube channel (10) or the supporting elements (12) are height adjustable.

9. A surface heating and/or cooling device according to any one of the preceding claims, **characterized in that** the trunk tube channel (10) is formed by a profile element (16) which forms a retaining area (18) for the trunk tubes (20), the height (h₃) of which is greater than/equal to a diameter of the trunk tubes (20).

10. A surface heating and/or cooling device according to any one of the preceding claims, **characterized in that** the profile element (16) preferably comprises positioning aids (30) for the trunk tubes (20) which are designed as spacers.

11. A surface heating and/or cooling device according to any one of the preceding claims, **characterized in that** the trunk tube channel (10) is assigned at least one tension anchor (29).

12. A surface heating and/or cooling device according to claim 11, **characterized in that** the at least one tension anchor (29) is formed from elements which are force-fit connected to side pieces (38) of the trunk tube channel (10).

13. A surface heating and/or cooling device according to any one of the preceding claims, **characterized in that** the trunk tube channel (10) is assigned at least one holding-down clamp (42) for the trunk tubes (20).

14. A surface heating and/or cooling device according to any one of the preceding claims, **characterized in that** the trunk tube channel (10) consists of a perforated metal sheet.

15. A surface heating and/or cooling device according to any one of the preceding claims, **characterized in that** the trunk tube channel (10) consists of a grille element.

16. A surface heating and/or cooling device according to any one of the preceding claims, **characterized in that** the trunk tube channel (10) can be assigned an element which at least periodically and/or partially closes the openings of the perforated metal sheet or the grille element.

17. A surface heating and/or cooling device according to any one of the preceding claims, **characterized in that** the element is a core (54) which at least partially fills the interior space of the trunk tube channel.

18. A surface heating and/or cooling device according to any one of the preceding claims, **characterized in that** the element is a foil or similar which can be applied on the inner side of the trunk tube channel (10).

## Revendications

1. Elément étendu d'un bâtiment avec un équipement de chauffage et/ou de refroidissement étendu (100) intégré, avec au moins une natte de tubes capillaires (22) dont les tubes capillaires (24) sont raccordés à des tubes de base (20) constitués sous forme de tubes distributeurs et collecteurs, la natte de tubes capillaires (22), au moins au nombre de un, étant intégrée dans l'élément étendu du bâtiment, et ses tubes de base (20) pouvant être raccordés à des conduites d'amenée ou d'évacuation côté bâtiment, **caractérisé en ce que**
une gaine de tubes de base (10) est, pour loger les tubes de base (20), au moins au nombre de un, intégrée dans l'élément étendu dans une couche de chape (26) indépendamment des tubes de base (20) et de la natte de tubes capillaires (22), et la natte de tubes capillaires (22), au moins au nombre de un, avec les tubes de base (20), est recouverte d'une couche de chauffage et/ou de refroidissement (32), de sorte qu'ils sont totalement intégrés dans l'élément étendu, la couche de chauffage et/ou de refroidissement étant mise en place sur la couche de chape (26).

2. Equipement de chauffage et/ou de refroidissement étendu selon une des revendications précédentes, **caractérisé en ce que** la gaine de tubes de base (10) est intégrée dans l'élément étendu d'une façon résistante à la flexion autour de son axe longitudinal et de son axe transversal.

3. Equipement de chauffage et/ou de refroidissement étendu selon une des revendications précédentes, **caractérisé en ce que** la gaine de tubes de base (10) est disposée, par le biais d'éléments d'appui (12), sur un plateau de tubes (14).

4. Equipement de chauffage et/ou de refroidissement étendu selon la revendication 3 **caractérisé en ce que** les éléments d'appui (12) sont formés de plaques de raccordement (23) et/ou de plaques de terminaison (27).

5. Equipement de chauffage et/ou de refroidissement étendu selon la revendication 3, **caractérisé en ce que** les éléments d'appui (12) présentent au moins une traversée (25).

6. Equipement de chauffage et/ou de refroidissement étendu selon une des revendications précédentes, **caractérisé en ce que** les éléments d'appui (12) constituent des tirants (29) agissant transversalement à l'axe longitudinal de la gaine de tubes de base (10).

7. Equipement de chauffage et/ou de refroidissement étendu selon une des revendications précédentes, **caractérisé en ce que** les éléments d'appui (12) présentent des zones de support (27).

8. Equipement de chauffage et/ou de refroidissement étendu selon une des revendications précédentes, **caractérisé en ce que** la gaine de tubes de base (10) ou les éléments d'appui (12) sont réglables en hauteur.

9. Equipement de chauffage et/ou de refroidissement étendu selon une des revendications précédentes, **caractérisé en ce que** la gaine de tubes de base (10) est formée d'un élément profilé (16) constituant une zone de réception (18) pour les tubes de base (20), élément profilé dont la hauteur (h3) est supérieure / égale à un diamètre des tubes de base (20).

10. Equipement de chauffage et/ou de refroidissement étendu selon une des revendications précédentes, **caractérisé en ce que** l'élément profilé (16) englobe de préférence des aides au positionnement (30) des tubes de base (20) constitués en tant qu'éléments d'écartement.

11. Equipement de chauffage et/ou de refroidissement étendu selon une des revendications précédentes, **caractérisé en ce qu'**au moins un tirant (29) est affecté à la gaine de tubes de base (10).

12. Equipement de chauffage et/ou de refroidissement étendu selon la revendication 11, **caractérisé en ce que** le tirant (29), au moins au nombre de un, est formé d'éléments raccordés par friction à des branches (38) de la gaine de tubes de base (10).

13. Equipement de chauffage et/ou de refroidissement étendu selon une des revendications précédentes, **caractérisé en ce qu'**au moins un serre-flan (42) pour les tubes de base (20) est affecté à la gaine de tubes de base (10).

14. Equipement de chauffage et/ou de refroidissement étendu selon une des revendications précédentes, **caractérisé en ce que** que la gaine de tubes de base (10) se compose d'une tôle perforée.

15. Equipement de chauffage et/ou de refroidissement étendu selon une des revendications précédentes, **caractérisé en ce que** la gaine de tubes de base (10) se compose d'un élément en treillis.

16. Equipement de chauffage et/ou de refroidissement étendu selon une des revendications précédentes, **caractérisé en ce qu'**un élément fermant, au moins par moments et/ou partiellement, les ouvertures de la tôle perforée ou de l'élément en treillis, peut être affecté à la gaine de tubes de base (10).

17. Equipement de chauffage et/ou de refroidissement étendu selon une des revendications précédentes, **caractérisé en ce que** l'élément est un noyau (54) remplissant au moins partiellement l'espace intérieur de la gaine de tubes de base.

18. Equipement de chauffage et/ou de refroidissement étendu selon une des revendications précédentes, **caractérisé en ce que** l'élément est une feuille ou similaire pouvant être appliquée sur le côté intérieur de la gaine de tubes de base (10).
